(19) Europäisches Patentamt
European Patent Office
Office européen des brevets

(11) Veröffentlichungsnummer: **0 367 003 B1**

(12) **EUROPÄISCHE PATENTSCHRIFT**

(45) Veröffentlichungstag der Patentschrift: **15.06.94**

(51) Int. Cl.$^5$: **C08B 15/06**, D06M 15/03

(21) Anmeldenummer: **89119139.7**

(22) Anmeldetag: **14.10.89**

# (54) Neue Polysaccharide, Verfahren zu ihrer Herstellung und ihre Verwendung.

(30) Priorität: **27.10.88 DE 3836599**

(43) Veröffentlichungstag der Anmeldung:
**09.05.90 Patentblatt 90/19**

(45) Bekanntmachung des Hinweises auf die Patenterteilung:
**15.06.94 Patentblatt 94/24**

(84) Benannte Vertragsstaaten:
**DE FR GB IT NL SE**

(56) Entgegenhaltungen:
**FR-A- 2 073 901**
**US-A- 4 330 440**

(73) Patentinhaber: **Wolff Walsrode Aktiengesellschaft**
**Postfach 15 15**
**D-29655 Walsrode(DE)**

(72) Erfinder: **Buysch, Hans-Josef, Dr.**
**Brandenburger Strasse 28**
**D-4150 Krefeld(DE)**
Erfinder: **Klausener, Alexander, Dr.**
**Dahlerdyck 173**
**D-4150 Krefeld(DE)**
Erfinder: **Szablikowski, Klaus, Dr.**
**Claudiusstrasse 25**
**D-3030 Walsrode(DE)**
Erfinder: **Balser, Klaus, Dr.**
**Geibelstrasse 24**
**D-3030 Walsrode(DE)**
Erfinder: **Wilke, Michaela, Dr.**
**Ahornweg 9**
**D-3043 Schneverdingen(DE)**

(74) Vertreter: **Zobel, Manfred, Dr. et al**
**BAYER AG**
**Konzernverwaltung RP**
**Patente Konzern**
**D-51368 Leverkusen (DE)**

EP 0 367 003 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Polysaccharide, ein Verfahren zu ihrer Herstellung und ihre Verwendung.

Basische und kationische Polysaccharide sind begehrt als Hilfsmittel für die Papierfabrikation, Ausgangsprodukte für die Herstellung hochaktiver Filtermaterialien, die im medizinischen Bereich und in der Nahrungsmittelindustrie Verwendung finden und auch als Zusätze zu hygienischen und kosmetischen Reinigungs- und Pflegemitteln. Ihre Wirksamkeit ist in der Regel umso größer, je mehr basische und/oder kationische Gruppen sie enthalten.

Basische Polysaccharide dienen u.a. als Ionenaustauscher (US-A 4 199 485) zur Herstellung säurelöslicher Polysaccharide (US-A 2 623 041) und als Ausgangsprodukte für die Synthese kationischer Polysaccharide (vgl. US-A 2 768 162).

Es ist also wünschenswert, Polysaccharide in einem mehr oder weniger hohen Grad entsprechend den jeweiligen Anforderungen substituieren zu können. Man hat schon früh Cellulosesulfonate mit Aminen umgesetzt, um dadurch zu N-haltigen Cellulosen zu gelangen. Die erhaltenen Substitutionsgrade waren jedoch unzureichend (z.B. 0,8 Gew.-% N; vgl. Angew. Chem. 39, 1509-36 (1926)) und die Ausbeuten gering (vgl. J. Amer. Chem. Soc. 63, 1688-1691).

Eine Kationisierung von Baumwolle zur Verbesserung der Anfärbbarkeit mit basischen Farbstoffen wird in GB-PS 1 082 880 und US-A 4 178 438 beschrieben. Man verwendet dazu N-Methylol-chloracetamid (GB-PS) bzw. N-Methylol-ß-amino-propionamide (US-PS), die mit der Faser zur Reaktion gebracht und dann mit tertiären Aminen (GB-PS) bzw. Alkylierungsmitteln (US-PS) kationisiert werden. Die Substitutionsgrade sind gering. Der maximale Gehalt an basischem, also quaternisierbarem N beträgt in beiden Fällen etwa 1,3 Gew.-%.

Nach US-A 3 472 840 erhält man kationische Celluloseether durch Alkylierung von Cellulose-hydroxyethylether mit 3-Chlor-2-hydroxypropyl-trimethyl-ammoniumchlorid oder mit dem daraus in Gegenwart von Alkalihydroxid entstehenden 2,3-Epoxypropyl-trimethyl-ammoniumchlorid. Obwohl das Alkylierungsmittel häufig in großem Überschuß verwendet wird, übersteigt der Substitutionsgrad nicht den Wert von 0,4. Ähnliches gilt für das Verfahren der EP-A-233 336, das das gleiche Alkylierungsmittel vorschlägt für die Kationisierung von Stärke unter besonderen vorteilhafteren Verfahrensbedingungen. Der DS bleibt unter 0,2.

Eine weitere Variante zu dem Verfahren der US-A 3 472 840 schlägt die EP-A-189 935 vor, nach der hydrophobe kationische Cellulosether entstehen. Dabei werden ebenfalls Epoxiquartärsalze als Alkylierungsmittel eingesetzt. Die Ergebnisse ähneln denen der US-A 3 472 840. Höhere Substitutionsgrade haben die aus der US-A 2 768 162 bekannten Celluloseether. In den Beispielen wird ein DS von 0,7 angegeben, weil von einem Vorprodukt ausgegangen wird, das diesen DS schon aufweist. Das Verfahren erscheint einfach und praktikabel. Die Ausgangsprodukte sind jedoch nur schwer zugänglich. Man kann sie gewinnen nach den Verfahren der US-A 26 23 041 und US-A 26 23 042 durch Alkylierung von Cellulose und Celluloseethern mit Dialkylaminoethylchlorid-hydrochlorid. Entsprechend der US-A 26 23 041 wird in Lösung gearbeitet, wobei nur geringe Gewichtsanteile Cellulose, bezogen auf die Gesamtmenge, in einer hochkonzentrierten wäßrigen Lösung von Trimethylbenzylammoniumhydroxid gelöst werden können. Diese quartäre Ammoniumbase ist nicht nur sehr teuer, sondern kann auch nur schwer zurückgewonnen und aus dem gebildeten Salz regeneriert werden. In der US-A 26 23 042 wird die Alkylierung angeblich in Suspension durchgeführt. Dies ist nicht verständlich, da wiederum nur geringe Mengen Cellulose pro Ansatz und wie in der US-A 26 23 041 große Mengen der quartären Ammoniumbase eingesetzt werden. Die Anwendung ähnlicher Bedingungen legt nahe, daß auch hier zumindestens partielle Lösung der Cellulose erfolgt, erkennbar auch an den geringen Mengen Cellulose, die umgesetzt werden können. Das verwendete Reagenz Dialkylaminoethylchlorid-hydrochlorid verhält sich unter den Alkylierungsbedingungen ambivalent. Es kann nicht nur mit der Cellulose, sondern auch mit sich selber reagieren.

Man erhält in jedem Fall dimere bis oligomere quartäre Ammoniumverbindungen, die sich punktuell mit der Cellulose verbinden und einen durchgehend hohen Substitutionsgrad vortäuschen können oder sie sind nur mit der Cellulose aggregiert und durch Reinigungsoperationen schwer entfernbar.

Die geäußerten Bedenken werden gestützt durch die DE-A-25 09 937 in der ein Verfahren zur Kationisierung von Ethylcellulose durch Alkylierung mit Diethylaminoethylchlorid beschrieben wird. Man alkyliert dabei in heterogener Phase einerseits Cellulose in Gegenwart von NaOH als Base und erreicht trotz überschüssigem Alkylierungsmittels nur niedrige Substitutionsgrade von 0,1-0,22 an tertiärem Aminorest. Anschließend wird dieses Vorprodukt mit Ethylchlorid zu aminosubstituierter Ethylcellulose umgesetzt. Andererseits arbeitet man in Lösung mit vorgefertigter Ethylcellulose und alkyliert diese mit Diethylaminoethylchlorid. Auch unter diesen günstigeren Bedingungen sind die Substitutionsgrade unter vergleichbaren Bedingungen etwa gleich groß. Selbst wenn man wie in den Beispielen 4 bis 6 unter massivem Einsatz von

Alkylierungsmittel den Substitutionsgrad zu erhöhen versucht, gelingt dies nur sehr eingeschränkt von 0,30 auf 0,38. Gleichzeitig sinkt die Ausbeute bezogen auf eingesetztes Alkylierungsmittel unverhältnismäßig stark von 38 % auf 20 %. Offensichtlich nähert man sich dabei einem Grenzwert, der auch bei weit höherem Einsatz an Alkylierungsmittel nicht zu überschreiten ist.

Im übrigen arbeiten auch alle anderen bisher besprochenen Verfahren mit Kationisierungsmitteln, die mit sich selber reagieren können, wodurch die Substitution am Polysaccharid vermindert und Nebenprodukte und Polymere gebildet werden, die dem basischen oder kationischen Polysaccharid beigemengt und möglicherweise nicht mehr entfernt werden können. Aus den Formelbildern der US-A 34 72 840 ersieht man, daß auf die Cellulose Polyethergruppen mit quartären Gruppen aufgepfropft werden, so wie diese Pfropfung an einer Cell-$O^{\ominus}$-Gruppe beginnen kann, kann sie mit gleicher Wahrscheinlichkeit, gegebenenfalls sorgar höherer Wahrscheinlichkeit von einem $OH^{\ominus}$-Ion ausgehen, da sowohl Ion wie Alkylierungsmittel in Lösung vorliegen, die Cellulose aber in heterogener Phase.

Außerdem ist eine rasche Verseifung zum Quartärdiol möglich (vgl. Das Papier 35 (12), 555 (1981)).

Darum ist nach der Alkylierung immer ein aufwendiger Reinigungs- und Umfällprozeß erforderlich, um die kationisierte Cellulose von den kationischen Polyethern zu trennen (siehe Beispiele 1 bis 3 der US-A 34 72 840).

Zu diesen Schwierigkeiten kommen der hohe Preis und die bekannt hohe Toxizität der o.a. Epoxyquartärsalze. Was am Beispiel der Kationisierung mit Dialkylaminoethylchlorid und Epoxyquartärsalzen erläutert wurde, nämlich die Homopolymerisation und Selbstkondensation gilt auch für alle anderen genannten Alkylierungsmittel. Die N-Methylolamide der GB 10 82 880 und der US-A 41 78 438 reagieren bekanntlich leicht miteinander und bilden unbrauchbare Nebenprodukte und Polymere.

Entsprechend der vorliegenden Literatur hat man erkannt, daß über Dialkylaminoalkylderivate eine Kationisierung von Polysacchariden im technischen Bereich nicht praktikabel ist und daher fast ausschließlich Alkylierungen mit dem in der US-A 34 72 840 und der EP-A 233 336 genannten 3-Chlor-2-hydroxypropyltrimethylammoniumchlorid oder dem daraus entstehenden 2,3-Epoxypropyl-trimethylammoniumchlorid durchgeführt (vgl. Das Papier 34 (1980) S. 575-579; 35 (10 A), S. V 33-V 38 (1981); 35 (12), S. 555-562 (1981)).

Welche der drei letztgenannten Verbindungsklassen man einsetzen mag, man muß wegen der hohen Toxizität strenge Sicherheitsmaßnahmen einhalten, auf diesem Wege gewonnene kationische Polysaccharide sorgfältig von Nebenprodukten reinigen und alle wäßrigen Ablaugen wegen ihres Gehaltes an toxischen quartären Nebenprodukten aufarbeiten und entsorgen, was nur mit hohem Aufwand durchführbar ist.

Da den Quaternierungsreaktionen zugesetztes überschüssiges Alkylierungsreagenz in Nebenreaktionen verbraucht wird und nicht zurückgewonnen werden kann, sind auch unter ökonomischen Aspekten höhere Substitutionsgrade kaum realisierbar.

Der Erfindung lag die Aufgabe zugrunde, basische und kationische Polysaccharide mit einer eindeutigen, flexibel einstellbaren Substitution und möglichst hohem Substitutionsgrad herzustellen nach eindeutig verlaufenden Reaktionen mit möglichst preiswerten Reagentien.

Gegenstand der vorliegenden Erfindung sind Polysaccharide mit wiederkehrenden Einheiten I oder Salzen der Struktur Ia davon

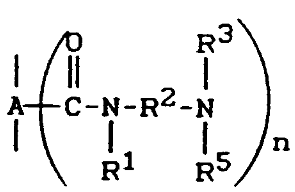

I

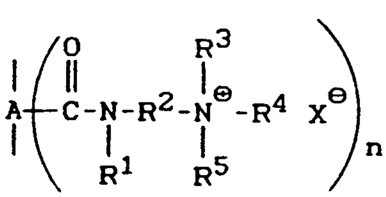

Ia

worin bedeuten

A eine Cellulose-, Methylcellulose-, Ethylcellulose-, Hydroxyethylcellulose-, Hydroxypropylcellulose-, Methylhydroxyethyl-cellulose-, Carboxymethyl-cellulose- sowie deren Natrium-,

Kaum-, Calcium-, Ammonium- oder quartären Ammoniumsalze, Natrium-, Kalium- Calcium-, Ammonium- oder quart. Ammonium-cellulosesulfat-, Stärke-, Dextrin-, Glycogen-, Inulin-, Graminin-, Mannose-, Galactose-, Hemicellulose-, Xylose-, Arabinose-, Gellan-, Xanthan- oder Pullulan-Einheit

$R^1$ H oder $C_1$-$C_4$,-Alkyl,

$R^2$ einen gegebenenfalls durch wenigstens ein O- oder N-Atom unterbrochenen Alkylenrest

$R^3$ und $R^4$ gleich oder verschieden, Wasserstoff einen gegebenenfalls durch OH oder $OR^1$ substituierten $C_1$-$C_{18}$-Alkylrest, $C_5$-$C_6$-Cycloalkylrest, Benzyl, Allyl oder (Meth)allyl,

$R^5$ einen gegebenenfalls durch OH oder $OR^1$ substitutierten $C_1$-$C_{18}$-Alkylrest, $C_5$-$C_6$-Cycloalkylrest oder Aryl,

n eine Zahl von 0,3 bis 3,0

X ein für A übliches Anion,

wobei

$R^1$ und $R^5$ zusammen mit $R^2$ und den beiden N-Atomen einen Ring,

$R^3$ und $R^5$ zusammen mit dem N-Atom einen Ring bedeuten können,

wobei vorzugsweise nur jeweils einer der Reste

$R^3$ bis $R^5$ Cycloalkyl oder $C_6$-$C_{18}$-Alkyl sein kann,

und wobei

$R^1$ und $R^5$ zusammen mit $R^2$ und den beiden N-Atomen einen vorzugsweise sechsgliedrigen Ring und

$R^3$ und $R^5$ zusammen mit dem N-Atom einen Ring bedeuten können, der vorzugsweise wenigstens ein weiteres Heteroatom, insbesondere Stickstoff und Sauerstoff, enthalten kann und der vorzugsweise 5- oder 6-gliedrig ist.

Die in den Strukturen I und Ia angegebene Carbonylgruppe -CO- ist über ein Sauerstoffatom an den Monosaccharidring gebunden.

In einer bevorzugten Ausführungsform ist $R^2$ ein gegebenenfalls durch wenigstens ein O oder N-Atom unterbrochener Alkylenrest mit 2 bis 8 C-Atomen in der Kette.

Für den Fall, daß die beiden N-Atome in I nicht zusammen in einem Ring stehen, bedeutet $R^2$ vorzugsweise auch einen Rest der allgemeinen Struktur Ib

$$-[R^6\text{-}Y\text{-}]_m R^7\text{-} \qquad \text{Ib}$$

worin

$R^6$ und $R^7$ gleich oder verschieden sind und einen gegebenenfalls durch ein O-Atom unterbrochenen Alkylenrest mit 2 bis 6 C-Atomen,

Y die Gruppe

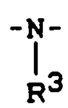 , 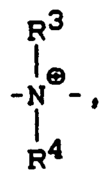 , 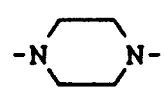 ,

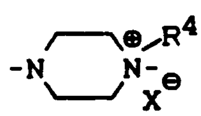 , 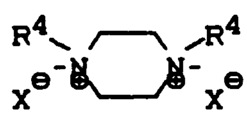 ,

wobei $R^3$, $R^4$ und X die oben angegebene Bedeutung haben

m eine ganze Zahl von 1 bis 5 bedeutet.

Vorzugsweise haben die Substituenten folgende Bedeutung:

$R^1$ H, $CH_3$

$R^3$ und $R^4$ $CH_3$, $C_2H_5$, $C_3H_7$, $C_4H_9$, Cycloalkyl, $CH_2$-$CH_2$-OH,$CH_2$-$CH_2$-$OCH_3$,

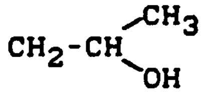, 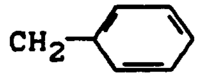,

$CH_2-CH=CH_2$,

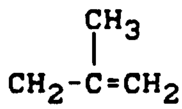,

R5 $CH_3$, $C_2H_5$, $C_3H_7$, $C_4H_9$, Phenyl,

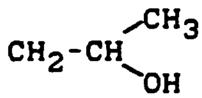,

$CH_2-CH_2-OH$, $CH_2-CH_2-OCH_3$,

R2 $-CH_2CH_2-$, $-(CH_2-)_3-$, $-(CH_2-)_4-$, $-(CH_2-)_6-$,

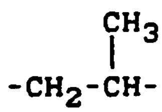,

$-(CH_2-)_3-O-(CH_2-)_2-$, $-(CH_2-)_2-O-(CH_2-)_2-$,

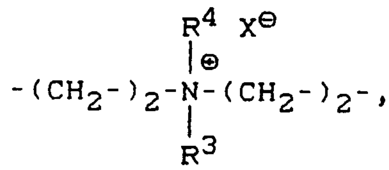

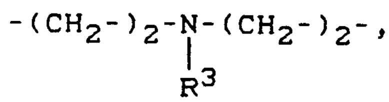, 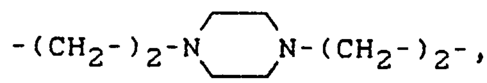

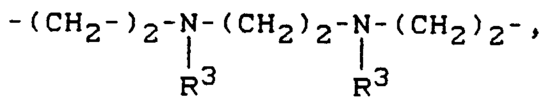

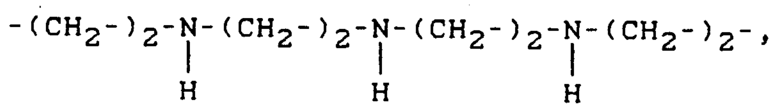

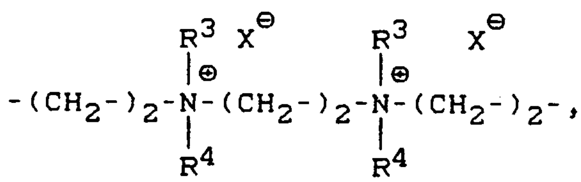

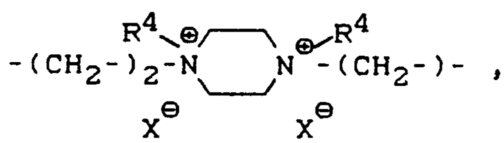

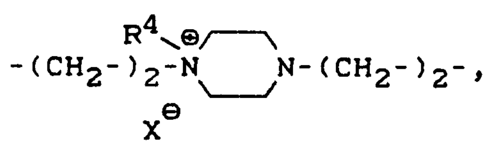

$R^3$ und $R^5$ mit dem N-Atom die Gruppe

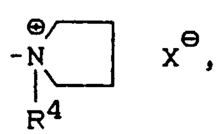 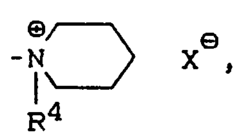 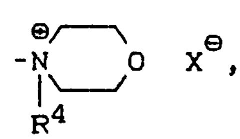

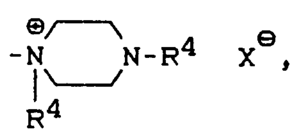 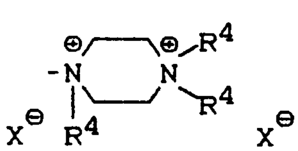

oder die entsprechenden basischen Heterocyclen vor der Salzbildung oder Quarternierung

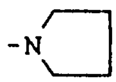 , 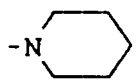 , 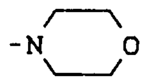 , 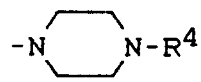

$R^1$, $R^2$ und $R^5$ zusammen mit dem N-Atom die Gruppe

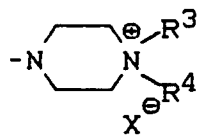 , 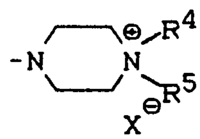 oder 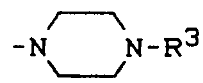 ,

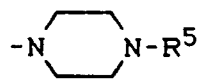

$X^{\ominus}$ Chlorid, Bromid, Iodid, $R^8SO_4^{\ominus}$, Benzolsulfonat, Toluolsufonat, Methansulfonat, Phosphat,
mit $R^8$ = H, $OR^1$, insbesondere H, $OCH_3$, $OC_2H_5$

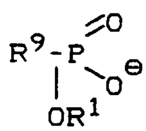 , 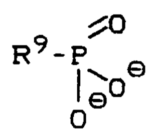

mit $R^9$ = $OH_3$ $OR^1$, $R^1$, insbesondere OH, $CH_3O$, $C_2H_5O$, $CH_3$, $C_2H_5$

m 1 bis 3,

n 0,5 bis 2,8.

Besonders bevorzugt sind folgende Bedeutungen:

$R^1$ H

$R^3$ und $R^4$ $CH_3$, $C_2H_5$, $CH_2CH_2OH$,

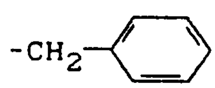 , $CH_2=CH-CH_2$,

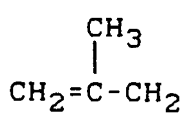

$R^5$ $CH_3$, $C_2H_5$, $CH_2CH_2OH$

$R^2$ $-(CH_2-)_2-$, $-(CH_2-)_3-$,

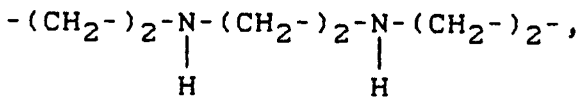

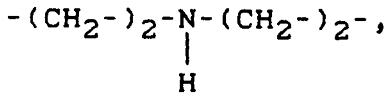, 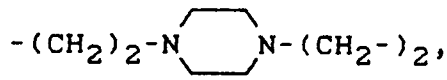

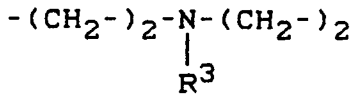

oder die entsprechenden salzartigen oder quarternierten Gruppen

$R^3$ und $R^5$ mit dem N-Atom die Gruppe

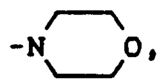 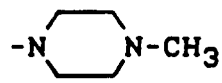

oder die entsprechenden quarternierten Gruppen

$X^{\ominus}$ Chlorid, Bromid, Iodid, $R^1SO_4^-$, Toluolsulfonat, Methansulfonat,

m 1 bis 2,

n 0,6 bis 2,2.

Ganz besonders bevorzugt sind folgende Bedeutungen

$R^1$ H,

$R^3$, $R^4$ und $R^5$ $CH_3$, $CH_2CH_2OH$, $C_2H_5$,

$R^2$ $-(CH_2-)_3-$,

$X^{\ominus}$ Chlorid, $CH_3SO_4^{\ominus}$

n 0,8 bis 2,1.

Die erfindungsgemäßen basischen und kationischen Polysaccharide werden hergestellt durch Umsetzung von Kohlensäureestern der Polysaccharide mit geeigneten Aminen zu Polysacchariden mit basischen Gruppen und gegebenenfalls anschließend mit geeigneten Alkylierungsmitteln zu Polysacchariden mit kationischen und/oder basischen und kationischen Gruppen.

Diese Reaktionen verlaufen klar und eindeutig, Die Amine und die Alkylierungsmittel reagieren nicht mit sich selber in unübersichtlichen Nebenreaktionen ab, und daher können überschüssige Mengen an Amin und Alkylierungsmittel zurückgewonnen und wiederverwendet werden.

Gegenstand der vorliegenden Erfindung ist auch ein Verfahren zur Herstellung der erfindungsgemäßen Polysaccharide, dadurch gekennzeichnet, daß man Polysaccharidcarbonate mit wiederkehrenden Einheiten der Formel VI

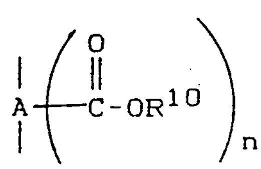 VI

worin bedeuten

A eine Einheit wie vorgenannt,

$R^{10}$ einen aliphatischen Rest mit 1 bis 18 C-Atomen, einen cycloaliphatischen Rest mit 5 bis 6 C-Atomen, einen araliphatischen Rest mit 7 bis 12 C-Atomen und einen gegebenenfalls mit Halogen, $NO_2$, $COOR^1$, $OR^1$, einen aliphatischen Rest mit 1 bis 6 C-Atomen oder Phenyl subst. aromatischen Rest, worin $R^1$ dem oben definierten Rest $R^1$ entspricht,

n eine ganze Zahl von 0,3 bis 3,0
mit Aminen der Struktur II umsetzt,

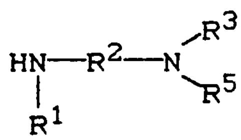

II

worin
$R^1$ bis $R^5$ die oben angegebene Bedeutung haben
und die so gewonnenen basischen Polysaccharide mit wiederkehrenden Einheiten der Struktur I gegebenenfalls mit Verbindungen der Formel III

$R^4$-X III

alkyliert, worin $R^4$ die oben angegebene Bedeutung hat und auf diese Weise Polysaccharide mit wiederkehrenden Einheiten der Struktur Ia erhält. Vorzugsweise ist Verbindung III ein Alkylierungsmittel mit $R^4$ wie oben definiert außer Wasserstoff.

$R^{10}$ ist bevorzugt ein aromatischer Rest mit 6 bis 10 C-Atomen, gegebenenfalls mit Cl, $CH_3$, $NO_2$, $OCH_3$ und $COOCH_3$ substituiert, besonders bevorzugt Phenyl, Chlorphenyl, Nitrophenyl und Naphthyl, ganz besonders bevorzugt Phenyl
n ist bevorzugt 0,5 bis 2,8
besonders bevorzugt 0,6 bis 2,2
ganz besonders bevorzugt 0,8 bis 2,1.

Polysaccharidcarbonate VI werden vorzugsweise hergestellt durch Umsetzung von Polysacchariden mit Kohlensäureestern, insbesondere Chlorkohlensäureestern in heterogener Phase, indem man das Polysaccharid gegebenenfalls nach Vorbehandlung mit einer Base in Gegenwart von vorzugsweise mindestens 0,5 Gew.-% Feuchte mit wenigstens einem Kohlensäureester umsetzt und bei Temperaturen von vorzugsweise zwischen 10 und 120°C mindestens 3 Stunden reagieren läßt Besonders bevorzugte Polysaccharidcarbonate sind bei 29°C zu maximal 20 Gew.-% in Chloroform löslich, wobei von den Carbonatgruppen maximal 30 % cyclische Carbonatgruppen sind.

Geeignete Ausgangsmaterialien zur Herstellung der erfindungsgemäßen Polysaccharid-Carbonate VI sind Cellulose wie Methylcellulose, Methylhydroxyethyl-cellulosen, Carboxymethylcellulose, ihre verschiedenen Salze mit Natrium-, Kalium-, Calcium- oder Ammonium- besonders quartären Ammoniumionen; Cellulosesulfat mit verschiedenen Gegenionen, etwa des Natriums, Kaliums, Calciums, Ammoniums und quartärer Ammoniumgruppen;
Stärke; Dextrin, Glycogen;
Inulin, Graminin;
Mannosan, Galactosan;
Hemicellulose, Xylosan, Arabinosan, sowie Gellan, Xanthan und Pullulan.

Bevorzugte Ausgangsprodukte sind Cellulose, Stärke und Dextrin, besonders bevorzugt sind
Cellulose, Methylcellulose, Ethylcellulose, Hydroxyethylcellulose, Hydroxypropylcellulose, Carboxymethylcellulose und deren Salze und Stärke.

Geeignete Amine der Formel II sind beispielsweise folgende:

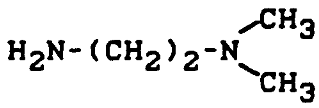 , 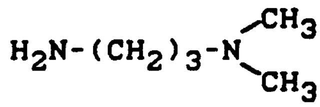 , 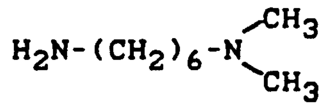 ,

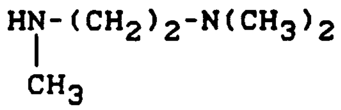 , 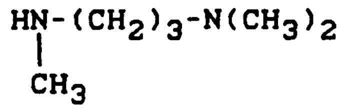 ,

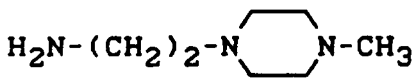 , 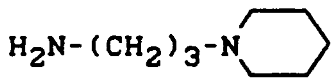 ,

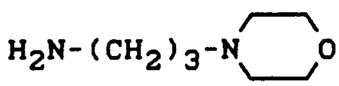 , 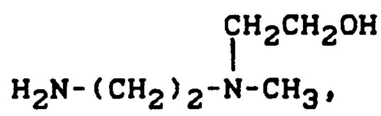 ,

$H_2N\text{-}(CH_2)_2\text{-}[NH\text{-}(CH_2)_2]_{1-5}\text{-}NH_2$, $H_2N\text{-}(CH_2)_3N(CH_2CH_2OH)_2$,

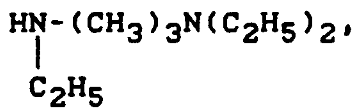 ,

$H_2N\text{-}(CH_2)_2\text{-}O\text{-}(CH_2)_2\text{-}N(CH_3)_2$,

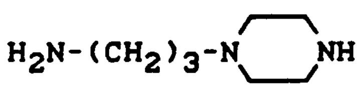 , 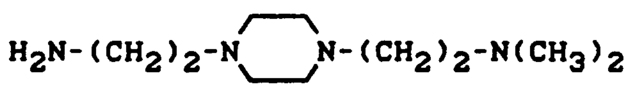 ,

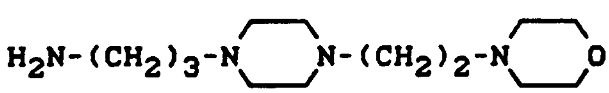 , 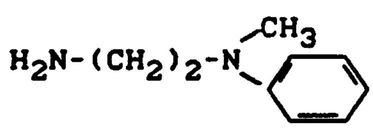 ,

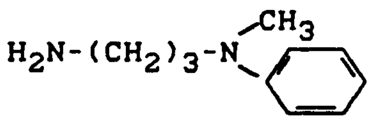, 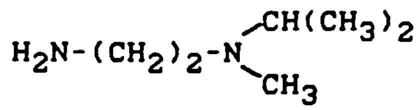,

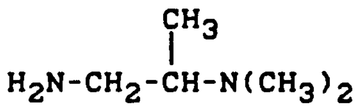, 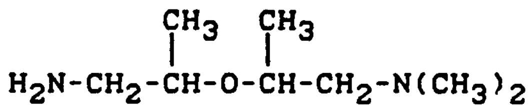,

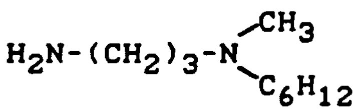,

$H_2N-(CH_2)_3-N(CH_2CH_2OCH_3)_2$,

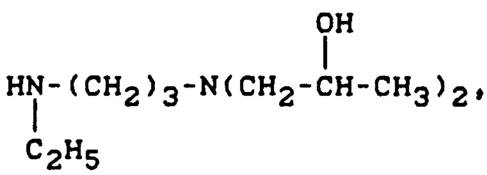, 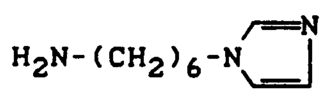,

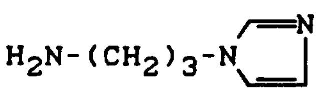, 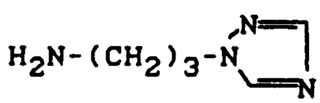.

bevorzugt sind beispielsweise:
$H_2N-(CH_2)_2N(CH_3)_2$, $H_2N-(CH_2)_3-N(CH_3)_2$, $H_2N-(CH_2)_6-N(CH_3)_2$, $H_2N-(CH_2)_3N(CH_2CH_2OH)_2$, $H_2N-(CH_2)_3-N-(C_2H_5)_2$,

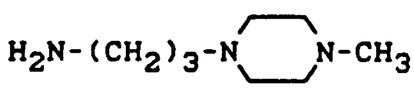,

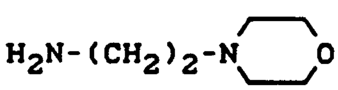, 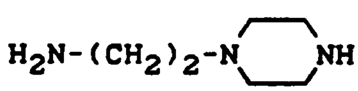,

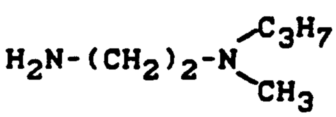, 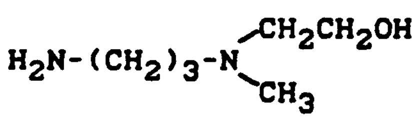,

$H_2N-(CH_2)_2-NH-(CH_2)_2-NH_2$

Geeignete Verbindungen III sind beispielsweise: HCl, HBr, Methansulfonsäure, Toluolsulfonsäure, Phosphorsäure, Benzolsulfonsäure, Methanphosphonsäure, Methylchlorid, Ethylchlorid, Propylchlorid, Butylchlorid, Chlorethanol, Chlorpropanol, Epichlorhydrin, 1-Chlorpropandiol-2,3, Chlorbutanol, 1-Chlor-2-methoxyethan, 1-Chlorpropanol-2, Benzylchlorid, (Meth)allylchlorid, Methylbromid, Methyliodid, Methylmethansulfonat, Methylbenzolsulfonat, Methyltoluolsulfonat, Trimethylphosphat, Methyl-O,O-dimethylphosphonat, Benzylmethansulfonat, Allyltosylat und Benzylmesylat.

Bevorzugt sind beispielsweise Methylchlorid, Chlorethanol, Dimethylsulfat, Methylmesylat, Methyltosylat, (Meth)allylchlorid, Benzylchlorid.

Die Umsetzung der Polysaccharid-Carbonate VI führt man bevorzugt in heterogener Phase bei Temperaturen zwischen 0 und 130 °C, bevorzugt 10 bis 120 °C, besonders bevorzugt 20 bis 110 °C, durch. Als Lösungsmittel verwendet man unter den Reaktionsbedingungen inerte Lösungsmittel wie Kohlenwasserstoffe, Halogenkohlenwasserstoffe, Ether, Alkohole, Carbonsäureamide und substituierte Harnstoffe.

Genannt seien beispielsweise Cyclohexan, Heptan, Isooctan, Benzol, Toluol, Xylol, Chlorbenzol, Dichlorbenzol, Methylenchlorid, Chloroform, Diethylether, Diisopropylether, Dibutylether, Dioxan, Benzodioxan, Anisol, Dimethoxybenzol, Ethylenglykol-dimethylether, Isopropanol, Isobutanol, Methanol, tert.-Butanol, Isoamylalkohol, Dimethylformamid, Dimethylacetamid, N-Methylpyrrolidon und N-Methylcaprolactam. Diese Lösungsmittel kann man sowohl bei der Aminierungs- wie der Alkylierungsreaktion verwenden.

Das Molverhältnis der Polysaccharidcarbonate VI zu den Aminen II bzw. Alkylierungsmitteln III beträgt zwischen 1:0,5 bis 1:10, bevorzugt 1:1 bis 1:8, besonders bevorzugt 1:1 bis 1:5. Natürlich können auch Molverhältnisse jenseits von 1:10 ohne Gefahr eingesetzt werden.

Die Reaktionszeit liegt im allgemeinen zwischen 1 h und 30 h, bevorzugt 2 bis 24 h, besonders bevorzugt zwischen 3 und 20 h.

Die Aufarbeitung erfolgt nach an sich bekannten Verfahren durch Abtrennen und Waschen mit Lösungsmitteln, um die abgespaltene Hydroxylverbindung $R^{10}OH$ und überschüssiges Amin bzw. überschüssiges Alkylierungsmittel zu entfernen. Bei geschickter Wahl von Lösungsmitteln, Hydroxylverbindung $R^{10}OH$, Amin und Alkylierungsmittel können diese Verbindungen aus den Reaktionslösungen durch Destillation wiedergewonnen und erneut verwendet werden.

Die erfindungsgemäßen basischen und kationischen Polysaccharide I bzw. Ia haben je nach Ausgangsprodukt und DS unterschiedliche Eigenschaften. Geht man von hochmolekularer Cellulose aus, so gewinnt man auch bei hohem DS wasserunlösliche Produkte, die für hochaktive Filtermaterialien geeignet sind. Nach einer vorausgehenden Alkalisierung und Vorquellung der Cellulose können bei entsprechend hohem Substitutionsgrad auch wasserlösliche Produkte gewonnen werden. Solche wasserlöslichen oder wasserquellbaren Derivate sind zugänglich aus weniger kristallinen Polysacchariden wie Dextrinen, Stärke, den Ethern der Cellulose, wie z.B. Methylcellulose.

## Beispiele

Anmerkungen:

Die Molangaben zu den Mengen an Polysaccharid beziehen sich auf die Monomereinheit. Auch wenn es nicht besonders erwähnt ist, werden alle Reaktionen an suspendiertem, nicht gelöstem Polysaccharid durchgeführt. Elementaranalysen werden in der Regel an bei 105 °C im Vakuum getrockneten Proben vorgenommen.

Die folgenden Beispiele 1 bis 6 beschreiben die Herstellung der als Ausgangsprodukte für die erfindungsgemäßen basischen und kationischen Polysaccharide dienenden Polysaccharid-Carbonate.

### Beispiel 1

106 g (0,5 Mol) einer Hydroxyethylcellulose mit einem Wassergehalt von 6,5 Gew.-% und einem DS von 1,1 werden in 1 l Benzol und 198 g (2,5 Mol) Pyridin (beide getrocknet) suspendiert und nach 20 h Rühren bei 50 °C im Verlaufe von 2 h mit 392 g (2,5 Mol) Chlorkohlensäurephenylester versetzt. Nach weiteren 20 h Rühren bei 80 °C wird abgekühlt, abgesaugt mit Benzol und Isopropanol salzfrei gewaschen und im Hochvakuum bei 50 °C bis zur Gewichtskonstanz getrocknet.
Ausbeute: 260 g mit einem DS von 2,4

| | | | | |
|---|---|---|---|---|
| Elementaranalyse: | C | 59,4 % | H | 4,7 % |
| (Ausgangsprodukt: | | 46,2 % | | 7,5 %) |

IR-Spektrum: starke Carbonat-CO-Bande bei 1770 $cm^{-1}$

Beispiel 2

Eine Matte aus langfaseriger handelsüblicher Cellulose wird zerpflückt über Nacht in Wasser gequollen, die Flocken im Starmix zerkleinert, abgesaugt und gepreßt, ca. 40 h bei 105 °C im Vakuum bis zur Gewichtskonstanz getrocknet und noch vorhandene Flocken im Starmix zerfasert.

81 g (0,5 Mol) der so vorbereiteten Cellulose werden in 1,5 l Methylenchlorid und 158 g (2,0 Mol) Pyridin (beide über Zeolith getrocknet) nach Zugabe von 2,5 g (0,14 Mol) Wasser suspendiert und 20 h bei Raumtemperatur vorbehandelt. Bei 20 bis 25 °C werden in 3 h 235,5 g (1,5 Mol) Chlorkohlensäurephenylester zugetropft und das Gemisch wird noch 20 h bei 25° und 5 h bei 45 °C gerührt. Nach Abkühlen, Abdrücken, Waschen mit Methylenchlorid und Isopropanol wird der Filterrückstand bei 50 °C im Vakuum bis zur Gewichtskonstanz getrocknet.
Ausbeute: 141 g faseriges Material

| | | | | |
|---|---|---|---|---|
| Elementaranalyse: | C | 55,0 % | H | 5,1 % |

DS 1,0 bis 1,2

Beispiel 3

Zu einer Suspension von 180 g (1 Mol Monomer) Methylcellulose (4 bis 5 % $H_2O$) mit einem Substitutionsgrad von 1,4 in 316 g (4,0 Mol) Pyridin und 2,0 l Methylenchlorid (beide getrocknet mit Molekularsieb Baylith T 144), die 15 h bei Raumtemperatur gerührt wurde, tropft man in 3 h 314 g (2,0 Mol) Chlorkohlensäurephenylester bei Raumtemperatur hinzu, rührt noch 20 h bei 20 bis 25 °C, saugt ab, wäscht mit Methylenchlorid und Isopropanol salzfrei und trocknet im Vakuum bei 50 °C bis zur Gewichtskonstanz. Man erhält 316 g eines lockeren Materials mit einem DS von 1,3.

| | | | | |
|---|---|---|---|---|
| Elementaranalyse:<br>(Methylcellulose: | C | 58,6 %<br>49,2 % | H | 5,29 %<br>7,1 %) |

Beispiel 4

162 g (1,0 Mol) Fichtencellulose (6 % $H_2O$) werden 3 h mit 18 %iger NaOH behandelt, abgesaugt, mit Wasser alkalifrei gewaschen und mit Pyridin wasserfrei. Zu der Suspension in Pyridin gibt man in 2 h 314 g (2 Mol) Chlorameisensäurephenylester und hält 12 h bei 80 °C. Man saugt ab, wäscht mit Isopropanol oder Wasser und trocknet bei 50 °C im Vakuum.
Ausbeute: 349 g, DS ca. 2

Beispiel 5

53 g (0,25 Mol) Hydroxyethylcellulose (6-7 % $H_2O$, DS 1,1), 100 g Pyridin und 100 g Chlorkohlensäurephenylester werden in Benzol 24 h bei 20 °C und 5 h bei 80 °C gerührt. Man wäscht nach Absaugen mit Isopropanol und trocknet im Vakuum bei 50 °C.
Ausbeute: 100 g mit einem DS von 1,3-1,4

| | | | | |
|---|---|---|---|---|
| Elementaranalyse: | C | 55,3 % | H | 6,5 % |

Beispiel 6

100 g (0,625 Mol) Stärke, 24 h bei Raumtemperatur in 197,5 g (2,5 Mol) Pyridin und 1 l Benzol gerührt, werden in 4 h tropfenweise mit 290 g (1,85 Mol) Chlorkohlensäurephenylester versetzt und noch 10 h bei Raumtemperatur und 20 h bei 80 °C gerührt. Absaugen, Waschen mit Isopropanol/Wasser (1:2) und Trocknen im Hochvakuum ergibt einen schwach rosa gefärbten Feststoff.
Ausbeute: 200 g, DS 1,5

| Elementaranalyse: | C | 58,9 % | H | 4,5 % |
|---|---|---|---|---|

IR-Spektrum: starke Carbonat-CO-Bande
Die folgenden Beispiele 7 bis 20 zeigen die Synthese der erfindungsgemäßen basischen und kationischen Polysaccharide aus den Polysaccharid-Carbonaten. In Beispiel 20 wird ein Produkt erhalten, das sowohl basische wie kationische Gruppen enthält.

Beispiel 7

Zu einer Suspension von 260 g (0,5 Mol) Hydroxyethylcellulosecarbonat aus Beispiel 1 in 1,5 l bis 2,0 l Dioxan gibt man 194 g (1,9 Mol) 3-N,N-Dimethylaminopropylamin und läßt 20 h bei 50 °C rühren. Nach Abkühlen wird das Lösungsmittel abgetrennt, der Rückstand mit Diethylether digeriert, mit Methanol gewaschen und im Hochvakuum getrocknet.
Ausbeute: 250 g mit einem N-Gehalt von 11,7 und einem DS von 1,9 bis 2,0
IR-Spektrum: starke Urethan-CO-Bande bei 1720 $cm^{-1}$

Beispiel 8

Zu einer Suspension von 80 g basischer Hydroxyethylcellulose aus Beispiel 7 in 1 l Benzol gibt man 80 g (1 Mol) 2-Chlorethanol und hält 20 h unter Rühren bei 60 °C. Das Lösungsmittel wird abgetrennt, der Rückstand mit Ether einige Male digeriert und im Hochvakuum getrocknet.
Ausbeute: 106 g gelblicher Feststoff mit einem N-Gehalt von 8,2 %
Cl-Gehalt von 11,1 % und
DS von 1,9 bis 2,0.

Beispiel 9

141 g (0,5 Mol) des Cellulosecarbonats aus Beispiel 2 und 135 g (1,33 Mol) 3-N,N-Dimethylamino-propylamin werden in 2 l Toluol 10 h bei 25 °C und 18 h bei 50 °C gerührt, abgesaugt, mit Toluol gewaschen, abgepreßt und bei 50 °C im Vakuum getrocknet.
Ausbeute: 153 g mit einem H-Ghalt von 9,8 und einem DS von 1,0

Beispiel 10

153 g (0,5 Mol) des basischen Celluloseurethans aus Beispiel 9 werden mit 120 g (1,5 Mol) 2-Chlorethanol in 2 l Toluol 8 h bei 50 °C gerührt, abgesaugt, gewaschen und bei 50 °C im Vakuum getrocknet.
Ausbeute: 150 g faseriges Produkt mit einem
N-Gehalt von 6,2 % und einem
Cl-Gehalt von 7,0 %.
Dieses Cellulosederivat ist unlöslich in Wasser und organischen Solventien.

Beispiel 11

200 g (0,6 Mol) des Methylcellulosecarbonates aus Beispiel 3 und 194 g (1,9 Mol) 3-N,N-Dimethylamino-propylamin werden in 1,8 l Toluol 10 h bei 50 °C gerührt, das Lösungsmittel abgetrennt, der Feststoff 3 x mit Toluol aufgerührt und gewaschen und der Filterrückstand bei 50 °C im Vakuum bis zur Gewichtskonstanz getrocknet: 210 g wasserunlösliches Produkt mit einem N-Gehalt von 9,9 % und einem DS von 1,2.

Beispiel 12

100g (0,3 Mol) der Aminocellulose aus Beispiel 11 und 95 g (0,75 Mol) Dimethylsulfat werden in 1,5 l Toluol 12 h bei 50 °C gerührt. Nach Aufarbeitung mit Isopropanol und Ligroin und Trocknen bei 50 °C im Vakuum erhält man 146 g eines wasserlöslichen Produktes
mit einem S-Gehalt von 8,2 %,
einem N-Gehalt von 6,3 %
und einem DS von 1,1 bis 1,2.

Beispiel 13

Wiederholt man Beispiel 12 in Dioxan als Lösungsmittel, so erhält man das gleiche Ergebnis.

Beispiel 14

330 g aus Beispiel 4 werden mit 660 g 3-N,N-Dimethylaminopropylamin in 4 l Toluol 12 h bei 50°C gerührt, mit Toluol aufgearbeitet und an der Luft getrocknet.
Ausbeute: 397 g mit einem N-Gehalt von 10,7 %.

Beispiel 15

397 g aus Beispiel 14 werden mit 300 g Dimethylsulfat in Dioxan 12 h bei 50°C umgesetzt. Aufarbeitung mit Dioxan und Trocknen bei 50°C im Vakuum ergeben 556 g wasserlösliche kationisierte Cellulose mit
einem N-Gehalt von 7,6 %,
einem S-Gehalt von 9,6 % und
einem DS von ca. 2.

Beispiel 16

20 g des Produktes aus Beispiel 5 und 20 g Diethylentriamin werden in Benzol 24 h bei 25°C gerührt. Man saugt ab, wäscht mit Isopropanol und trocknet bei 50°C im Vakuum.
Ausbeute: 19 g mit einem N-Gehalt von 15,0 %
und einem DS von 1,3 bis 1,4.

Beispiel 17

30 g des Stärkecarbonats aus Beispiel 6, 300 ml Diethylether und 29 g 3-N,N-Dimethylaminopropylamin werden 20 h bei Raumtemperatur gerührt. Die flüssige Phase wird abdekantiert, die feste mit Diethylether digeriert, wobei ein feines Pulver entsteht, das abgesaugt, gewaschen und getrocknet wird.
Ausbeut: 20,2 g mit einem N-Gehalt von 11,8 %
und einem DS von 1,5.

Beispiel 18

36 g basisches Stärkeurethan aus Beispiel 17, 36 g Chlorethanol und 200 ml Toluol werden 12 h bei 50°C gerührt, der flüssige Anteil abdekantiert, der feste mit Diethylether digeriert, gewaschen, abgesaugt und getrocknet.
Ausbeute: 36 g wasserlösliches Pulver
mit einem N-Gehalt von 9,4 %
und einem Cl-Gehalt von 7,8 %.

Beispiel 19

Führt man die Reaktion nach Beispiel 17 analog in Tetrahydrofuran durch, so erhält man 18,6 g mit einem N-Gehalt von 11,7 % und einem DS von 1,5.

Beispiel 20

15 g Produkt aus Beispiel 19, 15 g Chlorethanol und 750 ml Tetrahydrofuran werden 12 h bei 50°C gerührt, in Diethylether eingegossen, abgesaugt, gewaschen und getrocknet.
Ausbeute: 13,1 g feines wasserlösliches Pulver
mit einem N-Gehalt von 10,8 %
und einem Cl-Gehalt von 2,6 %.

Beispiel 21

40 g (0,25 Mol) einer handelsüblichen Fichtencellulose mit 6 % Wassergehalt werden in 500 ml Benzol und 79 g (1,0 Mol) Pyridin für 15 h bei 80 °C gerührt und tropfenweise bei 10 bis 20 °C in 4 bis 5 h mit 157 g (1,0 Mol) Chlorkohlensäurephenylester versetzt, 60 h bei 20 °C und 12 h bei 80 °C gerührt. Nach Absaugen, Waschen mit Wasser und Isopropanol und Trocknen bei 105 °C im Vakuum bleibt ein pulveriges Cellulosecarbonat.
Ausbeute: 120 g mit einem DS von etwa 3.

| | | | | |
|---|---|---|---|---|
| Elementaranalyse: | C | 61,9 % | H | 4,1 % |

Das obige Produkt (120 g) wird mit 120 g 3-N,N-Dimethylaminopropylamin in 1 l Toluol 8 h bei 50 °C gerührt, abgesaugt, gewaschen und an der Luft getrocknet.
Ausbeute: 165 g mit einem N-Gehalt von 13,1 % und einem DS von etwa 2,7 bis 3,0.

Die erhaltenen 165 g lufttrockener Aminocellulose werden mit 120 g Chlorethanol in Toluol 8 h bei 50 °C gerührt. Nach Aufarbeitung mit Ligroin und Toluol und Trocknen an der Luft erhält man 135 g eines Cellulosederivats mit einem N-Gehalt von 11,8 %
und einem Cl-Gehalt von 6,0 %, das sich in Wasser löst.

Beispiel 22

44 g (0,25 Mol) einer Methylcellulose mit ca. 5 % Wasser und einem DS von 1,0, 79 g (1,0 Mol) Pyridin und 600 ml Chloroform werden 15 h bei 65 °C gerührt, in 3 h bei 10 °C tropfenweise mit 157 g (1,0 Mol) Chlorkohlensäurephenylester versetzt, 13 h bei 50 bis 60 °C gerührt, abgesaugt, chloridfrei gewaschen und getrocknet.
Ausbeute: 106 g mit einem DS von 2,0

| | | | | |
|---|---|---|---|---|
| Elementaranalyse: | C | 60,2 % | H | 4,3 % |

Die 106 g Methylcellulosecarbonat werden mit 100 g (1,25 Mol) 3-N,N-Dimethylamino-propylamin in 1 l Toluol 6 h auf 50 bis 60 °C gehalten, mit Ligroin und Toluol aufgearbeitet und gewaschen und an der Luft getrocknet. Ausbeute: 233 g
mit einem N-Gehalt von 12 % und
einem DS von 2,0
Das Produkt ist löslich in verdünnter Salzsäure.

Die 233 g basisches Methylcelluloseurethan werden mit 160 g Chlorethanol in Toluol 10 h auf 50 °C gehalten. Nach Abkühlen, Aufarbeitung mit Ligroin und Toluol und Trocknen an der Luft erhält man 261 g, nach Trocknen bei 50 °C i.Vak. 170 g
mit einem N-Gehalt von 9,5 %,
einem Cl-Gehalt von 9,1 % und
einem DS von ca. 2.
Das Produkt ist wasserlöslich.

Beispiel 23

Zu einer Suspension von 183 g (1,0 Mol) Methylcellulose (ca. 5 % $H_2O$, DS 1,4), 316 g (4,0 Mol) Pyridin und 1,5 l Methylenchlorid (beide mit Zeolith A getrocknet) tropft man in 3 h 47 g (0,30 Mol) Chlorkohlensäurephenylester und 20 h bei 25 °C und 5 h bei 45 °C. Nach Aufarbeitung mit Methylenchlorid und Isopropanol und Trocknen bei 50 °C erhält man 210 g. Diese setzt man in Toluol mit 40 g (0,5 Mol) 3-N,N-Dimethylaminopropylamin um in 12 h bei 50 °C. Nach Aufarbeitung mit Toluol und Trocknen bei 50 °C erhält man 182 g wasserlösliches Derivat mit einem N-Gehalt von 1,5 %.

Die 182 g werden mit 75 g Dimethylsulfat in Dioxan alkyliert in 12 h bei 50 °C. Nach Aufarbeitung mit Dioxan und Trocknen bei 50 °C im Vakuum bleiben 198 g wasserlösliche kationisierte Cellulose
mit einem N-Gehalt von 1,3 %
und einem S. Gehalt von 3,1 %.

Anwendungsbeispiele

Die Eignung von kationischen Polysacchariden für die Herstellung von medizinischen Filtermaterialien wird durch den Farbstoff-Adsorptionstest ermittelt.

Dazu wird 1 g einer zu untersuchenden Probe in 1 l destl. Wasser suspendiert, 0,143 mmol (50,1 mg) des Farbstoffs Betanaphtholorange 2 zugesetzt und 1 h gerührt. Man läßt 15 Min. absitzen, entnimmt wenige ml der überstehenden Flüssigkeit, filtriert durch eine G 2-Fritte und mißt photometrisch die Absorption bei 480 nm. Ist die Absorption noch zu gering, gibt man so oft eine weitere 0,143 mmol-Probe Farbstoff zu und wiederholt das obige Vorgehen, bis die Konzentration des Farbstoffs 0,1 mmol/l (35 mg/l) übersteigt.

Zur Auswertung des Tests trägt man in einem Diagramm die Konzentration des Farbstoffs in der Lösung gegen die jeweils eingesetzte Gesamtmenge des Farbstoffs auf. Die Filterwirkung des Probematerials ist dann umso besser je geringer die Farbstoffkonzentration bei einer bestimmten Gesamtmenge des Farbstoffs ist und je mehr Farbstoff man benötigt, um eine Konzentration von 0,1 mmol/l zu übersteigen (vgl. Diagramm).

Ergebnisse des Farbstoff-Adsorptionstests

Tabelle 1

| Polysaccharid aus Beispiel | Substituent | g adsorb. Farbstoff pro g Polysacch. | % Gehalt an | | |
|---|---|---|---|---|---|
| | | | N | Cl | S |
| 7 | Amin | 0,23 | 10,6 | - | - |
| 8 | Kat | 1,35 | 8,2 | 11,1 | - |
| 9 | Amin | 0,27 | 10,5 | - | - |
| 10 | Kat | 0,93 | 6,2 | 7,0 | - |
| 14 | Amin | 0,11 | 8,3 | - | - |
| 15 | Kat | 0,75 | 6,4 | - | 9,6 |

Die Tabelle zeigt, daß die erfindungsgemäßen kationischen Produkte außerordentlich hohe Adsorptionsaktivität aufweisen. Selbst die rein basischen Polysaccharide haben eine relativ hohe Wirksamkeit.

Vergleichsbeispiel 1 und 2

271 g (1,5 Mol) Fichtenzellstoff mit einem Feuchtegehalt von ca. 8 % wird in 3,6 l 6,6 %iger wäßriger Natronlauge gerührt, 1 h lang alkalisiert, von der Lauge getrennt und bis 150 bar abgepreßt und anschließend gründlich zerfasert. Dazu gibt man dann 70 g einer 53 %igen Lösung von 2,3-Epoxypropyltrimethylammoniumchlorid in Wasser (0,25 Mol) und knetet 5 h bei 50 °C. Nach Neutralisation mit 45 g Ameisensäure wird mit Wasser gewaschen, filtriert und getrocknet.

Man erhält Produkte mit einem N-Gehalt von 0,48 % und einem DS von 0,06.

Führt man die Reaktion analog in Suspension statt im Kneter durch, so kommt man zu gleichen Ergebnissen.

Es werden die in folgender Tabelle angegebenen Ergebnisse erhalten

| Vergleichsversuch | %-Gehalt Stickstoff | g adsorbierter Farbstoff pro g Polysaccharid |
|---|---|---|
| 1 | 0,26 | 0,12 |
| 2 | 0,48 | 0,19 |

## Patentansprüche

1. Polysaccharide enthaltend wiederkehrende Einheiten I oder Salz Ia davon

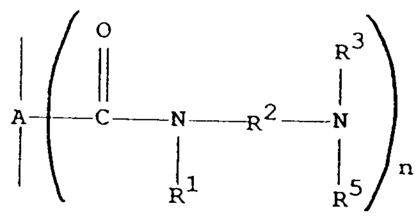

I

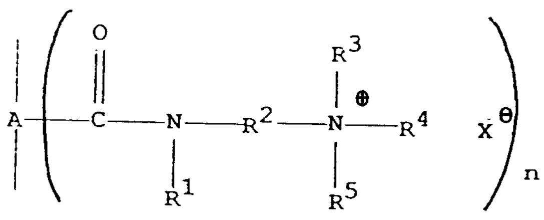

Ia

worin bedeuten

| | |
|---|---|
| A | eine Cellulose-, Methylcellulose-, Ethylcellulose-, Hydroxyethylcellulose-, Hydroxypropylcellulose-, Methylhydroxyethyl-cellulose-, Carboxymethyl-cellulose- sowie deren Natrium-, Kalium-, Calcium-, Ammonium- oder quartären Ammoniumsalze, Natrium-, Kalium-, Calcium-, Ammonium- oder quart. Ammonium-cellulosesulfat-, Stärke-, Dextrin-, Glycogen-, Inulin-, Graminin-, Mannose-, Galactose-, Hemicellulose-, Xylose-, Arabinose-, Gellan-, Xanthan- oder Pullulan-Einheit |
| $R^1$ | H oder $C_1$-$C_4$-Alkyl, |
| $R^2$ | einen gegebenenfalls durch wenigstens ein O- oder N-Atom unterbrochenen Alkylenrest |
| $R^3$ und $R^4$ | gleich oder verschieden, Wasserstoff, einen gegebenenfalls durch OH oder $OR^1$ substituierten $C_1$-$C_{18}$-Alkylrest, $C_5$-$C_6$-Cycloalkylrest, Benzyl, Allyl oder (Meth)allyl, |
| $R^5$ | einen gegebenenfalls durch OH oder $OR^1$ substitutierten $C_1$-$C_{18}$-Alkylrest, $C_5$-$C_6$-Cycloalkylrest oder Aryl, |
| n | eine Zahl von 0,3 bis 3.0 |
| X | ein A übliches Anion |

wobei

| | |
|---|---|
| $R^1$ und $R^5$ | zusammen mit $R^2$ und den beiden N-Atomen einen Ring, |
| $R^3$ und $R^5$ | zusammen mit dem N-Atom einen Ring bedeuten können. |

2. Polysaccharide gemäß Anspruch 1, dadurch gekennzeichnet, daß $R^2$ einen Rest

$-[R^6\text{-}Y\text{-}]_m R^7-$ Ib

bedeutet, worin bedeuten:

| | |
|---|---|
| $R^6$ und $R^7$ | gleich oder verschieden, einen gegebenenfalls durch ein O-Atom unterbrochenen Alkylenrest mit 2 bis 6 C-Atomen, |
| Y | die Gruppe |

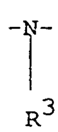 , 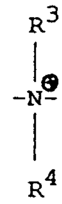 , 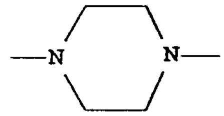

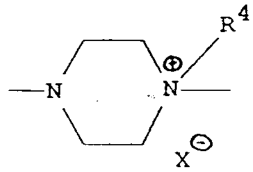 , 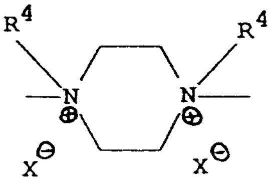 ,

$X^{\ominus}$ ein Anion,

m eine ganze Zahl von 1 bis 5.

**3.** Polysaccharide nach wenigstens einem der vorhergehenden Ansprüche, dadurch gekennzeichnet, daß bedeuten:

| | |
|---|---|
| $R^1$ | Wasserstoff, |
| $R^2$ | $-(CH_2-)_3-$, |
| $R^3$, $R^4$ und $R^5$ | $CH_3$, $CH_2CH_2OH$, $C_2H_5$, |
| $X^{\ominus}$ | Chlorid, $CH_3SO_4^{\ominus}$ |
| n | 0,8 bis 2,1. |

**4.** Verfahren zur Herstellung von Polysacchariden gemäß Anspruch 1 - 3, dadurch gekennzeichnet, daß man Carbonate mt wiederkehrenden Einheiten der Formel

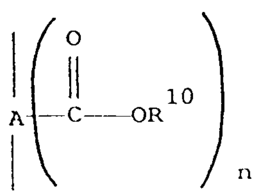

VI

worin

A die vorgenannte Bedeutung besitzt,

$R^{10}$ einen aliphatischen Rest mit 1 bis 18 C-Atomen, einen cycloaliphatischen Rest mit 5 bis 6 C-Atomen, einen araliphatischen Rest mit 7 bis 12 C-Atomen und einen gegebenenfalls mit Halogen, $NO_2$, $COOR^1$, $OR^1$, einen aliphatischen Rest mit 1 bis 6 C-Atomen oder Phenyl substituierten aromatischen Rest bedeutet, worin $R^1$ dem oben definierten Rest $R^1$ entspricht,

n eine ganze Zahl von 0,3 bis 3,0 ist

mit Aminen der Struktur II in heterogener Phase in inerten Lösungsmitteln bei Temperaturen zwischen 0 und 130 °C umsetzt

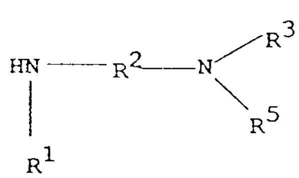

II

worin

$R^1$ bis $R^5$ die oben angegebene Bedeutung haben
und die so gewonnenen basischen Polysaccharide der Struktur I gegebenenfalls alkyliert.

**5.** Verfahren nach Anspruch 4, dadurch gekennzeichnet, daß die Polysaccharide der Struktur I alkyliert werden mit einem Alkylierungsmittel der Formel III

$R^4$-X III

worin
$R^4$ und X die in Anspruch 1 angegebene Bedeutung haben.

**6.** Verwendung von Polysacchariden gemäß einem der Ansprüche 1 bis 3 als Filtermaterial.

**Claims**

**1.** Polysaccharides containing recurring units I or salts Ia thereof:

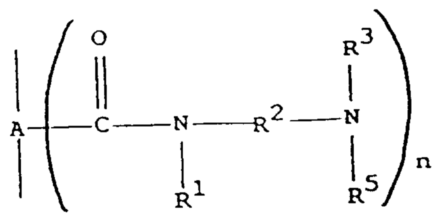
I

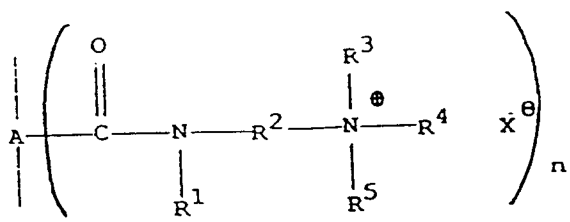
Ia

in which

| | |
|---|---|
| A | is a cellulose, methyl cellulose, ethyl cellulose, hydroxyethyl cellulose, hydroxypropyl cellulose, methy hydroxyethyl cellulose, carboxymethyl cellulose and sodium, potassium, calcium, ammonium or quaternary ammonium salts thereof, sodium, potassium, calcium, ammonium or quaternary ammonium cellulose sulfate, starch, dextrin, glycogen, inulin, graminin, mannose, galactose, hemicellulose, xylose, arabinose, gellan, xanthan or pullulan unit, |
| $R^1$ | is H or $C_{1-4}$ alkyl, |
| $R^2$ | is an alkylene radical optionally interrupted by at least one O or N atom, |
| $R^3$ and $R^4$ | may be the same or different and represent hydrogen, an optionally OH- or $OR^1$-substituted $C_{1-18}$ alkyl radical, $C_{5-6}$ cycloalkyl radical, benzyl, allyl or (meth)allyl, |
| $R^5$ | is an optionally OH- or $OR^1$-substituted $C_{1-18}$ alkyl radical, $C_{5-6}$ cycloalkyl radical or aryl, |
| n | is a number of 0.3 to 3.0, |
| X | is an anion typical of A, |
| $R^1$ and $R^5$ | forming a ring together with $R^2$ and the two N atoms, |
| $R^3$ and $R^5$ | forming a ring together with the N atom. |

**2.** Polysaccharides as claimed in claim 1, characterized in that $R^2$ is a group corresponding to the following formula:

$-[R^6-Y-]_mR^7-$ Ib

in which

$R^6$ and $R^7$ may be the same or different and represent a $C_{2-6}$ alkylene radical optionally interrupted by an O atom,

Y represents the group

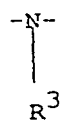 , 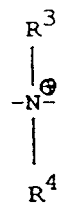 , 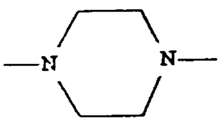

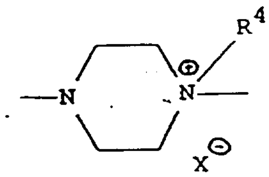 , 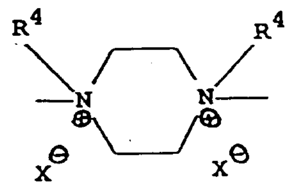 ,

$X^{\ominus}$ is an anion

m is an integer of 1 to 5.

**3.** Polysaccharides as claimed in at least one of the preceding claims, characterized in that

$R^1$ is hydrogen,

$R^2$ is $-(CH_2-)_3-$,

$R^3$, $R^4$ and $R^5$ represent $CH_3$, $CH_2CH_2OH$, $C_2H_5$,

$X^{\ominus}$ is chloride, $CH_3SO_4^{\ominus}$,

n is 0.8 to 2.1.

**4.** A process for the production of the polysaccharides claimed in claims 1 to 3, characterized in that carbonates containing recurring units corresponding to the formula:

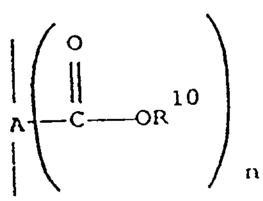 VI

in which

A is as defined above,

$R^{10}$ is an aliphatic $C_{1-18}$ radical a cycloaliphatic $C_{5-6}$ radical, an araliphatic $C_{7-12}$ radical and an aromatic radical optionally substituted by halogen, $NO_2$, $COOR^1$, $OR^1$, an aliphatic $C_{1-6}$ radical or phenyl, where $R^1$ corresponds to the substituent $R^1$ defined above,

n is an integer of 0.3 to 3.0,

are reacted with amines having the structure II:

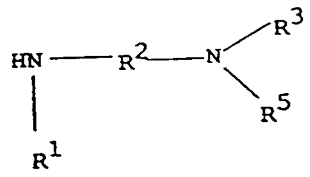

II

in which

$R^1$ to $R^5$ are as defined above,

in heterogeneous phase in inert solvents at temperatures of 0 to 130 ° C and the basic polysaccharides I thus obtained are optionally alkylated.

**5.** A process as claimed in claim 4, characterized in that the polysaccharides I are alkylated with an alkylating agent corresponding to formula III:

$R^4$-X III

in which

$R^4$ and X are as defined in claim 1.

**6.** The use of the polysaccharides claimed in any of claims 1 to 3 as a filter material.

**Revendications**

**1.** Polysaccharides contenant des motifs répétés I ou leurs sels Ia :

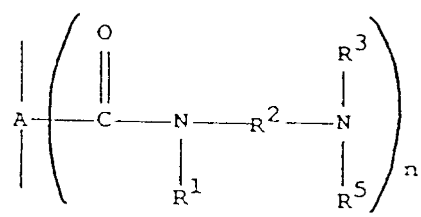

I

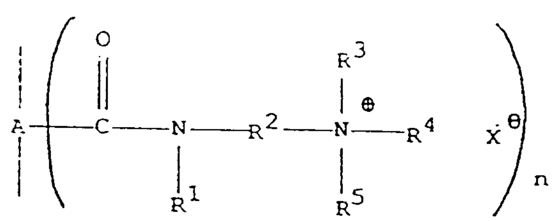

Ia

dans lesquels

A représente un motif de cellulose, de méthylcellulose, d'éthylcellulose, d'hydroxyéthylcellulose, d'hydroxypropylcellulose, de méthylhydroxyéthylcellulose,de carboxyméthylcellulose, ou de leurs sels de sodium, de potassium, de calcium, d'ammonium ou d'ammonium quaternaire, de cellulose-sulfate de sodium, de potassium, de calcium, d'ammonium ou d'ammonium quaternaire, d'amidon, de dextrine, de glycogène, d'inuline, de graminine, de mannose, de galactose, d'hémicellulose, de xylose, d'arabinose, de gellane, de xanthane ou de pullulane,

$R^1$ représente H ou un groupe alkyle en $C_1$-$C_4$,

$R^2$ représente un groupe alkylène éventuellement interrompu par au moins un atome de O ou de N,

$R^3$ et $R^4$, ayant des significations identiques ou différentes, représentent l'hydrogène, un groupe alkyle en $C_1$-$C_{18}$, cycloalkyle en $C_5$-$C_6$, benzyle, allyle ou (méth)allyle éventuellement substitué par OH ou $OR^1$,

$R^5$ représente un groupe alkyle en $C_1$-$C_{18}$, cycloalkyle en $C_5$-$C_6$ ou aryle éventuellement substitué par OH ou $OR^1$,

n est un nombre allant de 0,3 à 3,0,
X est un anion usuel pour A,
$R^1$ et $R^5$ peuvent former ensemble, avec $R^2$ et les deux atomes d'azote, un cycle,
$R^3$ et $R^5$ peuvent former ensemble et avec l'atome d'azote un cycle.

**2.** Polysaccharides selon la revendication 1, caractérisés en ce que $R^2$ représente un groupe :

$-[R^6\text{-}Y\text{-}]_m R^7\text{-}$ Ib

dans lequel
$R^6$ et $R^7$, ayant des significations identiques ou différentes, représentent chacun un groupe alkylène en $C_2$-$C_6$ éventuellement interrompu par un atome d'oxygène,
Y représente l'un des groupes

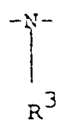 , 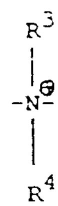 , 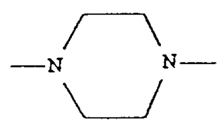

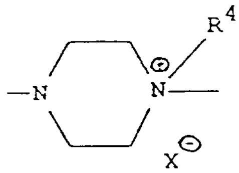 , 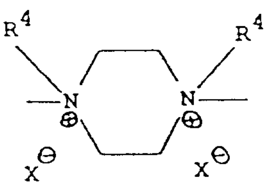

$X^{\ominus}$ représente un anion,
m est un nombre entier allant de 1 à 5.

**3.** Polysaccharides selon au moins une des revendications qui précèdent, caractérisés en ce que :
$R^1$ représente l'hydrogène,
$R^2$ représente $-(CH_2^-)_3$-,
$R^3$, $R^4$ et $R^5$ représentent $CH_3$, $CH_2CH_2OH$, $C_2H_5$,
$X^{\ominus}$ représente un anion chlorure, $CH_3SO_4^{\ominus}$,
n va de 0,8 à 2,1.

**4.** Procédé de préparation des polysaccharides selon les revendications 1 à 3, caractérisé en ce que l'on fait réagir des carbonates à motifs répétés de formule :

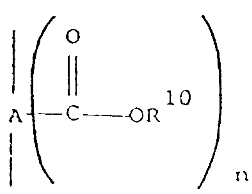 VI

dans laquelle
A a les significations indiquées ci-dessus,
$R^{10}$ représente un radical aliphatique en $C_1$-$C_{18}$, un radical cycloaliphatique en $C_5$-$C_6$, un radical araliphatique en $C_7$-$C_{12}$ et un radical aromatique éventuellement substitué par des halogènes, $NO_2$, $COOR^1$, $OR^1$, un radical aliphatique en $C_1$-$C_6$ ou un groupe phényle, $R^1$ correspondant au symbole $R^1$ défini ci-dessus,

n est un nombre entier allant de 0,3 à 3,0, avec des amines de structure II, en phase hétérogène, dans des solvants inertes, à des températures de 0 à 130 °C,

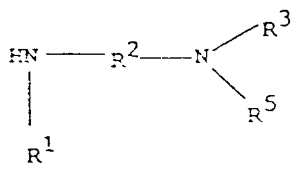

II

dans laquelle
$R^1$ à $R^5$ ont les significations indiquées ci-dessus, après quoi le cas échéant on alkyle les polysaccharides basiques de structure I ainsi obtenus.

**5.** Procédé selon la revendication 4, caractérisé en ce que l'on alkyle les polysaccharides de structure I à l'aide d'un agent alkylant de formule III :

$R^4$-X III

dans laquelle
$R^4$ et X ont les significations indiquées dans la revendication 1.

**6.** Utilisation des polysaccharides selon une des revendications 1 à 3, en tant que matières filtrantes.